# EUROPEAN PATENT APPLICATION

(11) **EP 0 983 820 A2**
(43) Date of publication of application: **08.03.2000**
(21) Application number: 99117024.2
(22) Date of filing: 30.08.1999
(51) Int. Cl.: B23Q 1/00, E05F 15/20

(54) **Front door assembly for machine tool**

(30) Priority: 01.09.1998 JP 24666198
(71) Applicant: Mori Seiki Co., Ltd., Yamatokoriyama, Nara 639-1160 (JP)
(72) Inventor: Ueda, Toshio, Yamatokoriyama-shi, Nara, 639-1160 (JP); Sakashita, Yoshinori, Yamatokoriyama-shi, Nara, 639-1160 (JP)
(74) Representative: Pellmann, Hans-Bernd, Dipl.-Ing.

(57) **Abstract**

Providing a front door assembly for machine tool which is easy to use, facilitating the opening or closing of even a heavy door and permitting the door to be partially opened. The door assembly includes a door body 2 laterally movable and a handle 10 disposed at a front face of the door body 2. The handle 10 is movable from a neutral position in a direction of an external force applied thereto. The door assembly further includes detection means 15 for detecting a direction of the handle moved from the neutral position, drive means 30 for assisting in the lateral movement of the door body 2, and control means 60 which receives a detection signal from the detection means 15 to control operations of the drive means 30 for assisting the door body 2 moving in the direction of the handle 10 moved. The drive means 30 assisting in the movement of the door body 2 permits an operator to use a very little force for laterally moving the door body 2 to an open or close position.

## Description

### BACKGROUND OF THE INVENTION

### Field of the Invention

The present invention relates to a front door assembly for machine tool which includes a laterally movable door body separating an interior machining area of a machine tool from a non-machining area, and a handle disposed at a front face of the door body, and which has an arrangement wherein the door body is caused to move laterally toward an open or close position by applying an external force to the handle.

### Description of the Related Art

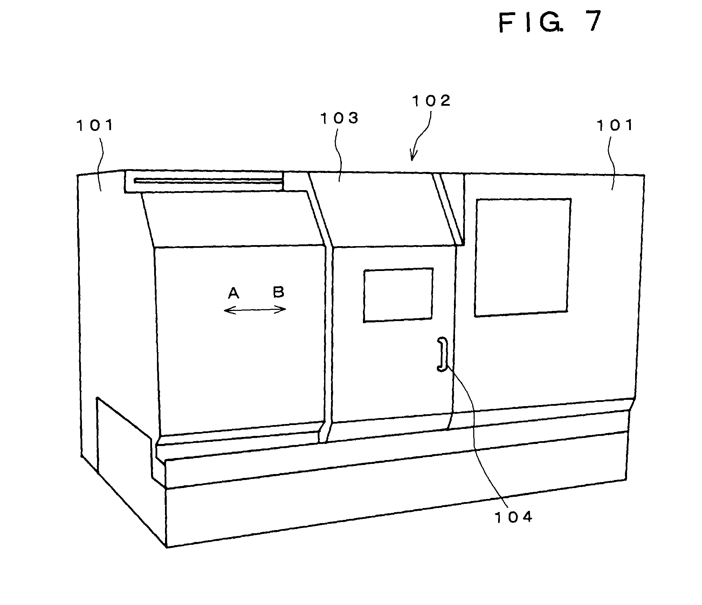

As shown in Fig.7, an NC lathe, for example, is arranged such that a whole machine body is covered by a cover 101 and a front door assembly 102 which separate the interior machining area from the non-machining area.

The front door assembly 102 includes a door body 103 adapted for lateral movement (sliding) in directions of arrows A-B, and a handle 104 disposed at a front face of the door body 103. The interior machining area may be communicated with the non-machining area (open state) or isolated therefrom (closed state) by manually pushing or pulling the handle 104 in the direction of arrow A or B. Incidentally, the illustrated front door assembly is opened by moving the door body 103 in the direction of arrow A and is closed by moving the door body 103 in the direction of arrow B.

Currently, some front door assemblies employ an actuator, such as an air cylinder, for moving the door body 103 in the directions of arrows A-B. In this case, the front door assembly 102 is provided with, additionally to the actuator, control means for controlling operations of the actuator and actuation input means such as a button. The actuation input means applies an actuation signal to the control means which responds to the signal by actuating the actuator for opening or closing the door body 103.

In a case where the door body 103 is very heavy as in the front door assembly 102 for a large machine tool, for example, it is never easy to manually open or close the door body 103. However, the aforementioned arrangement for automatic opening/closing of the door body 103 achieves a considerable reduction of load on an operator opening or closing the door body 103. Further, this arrangement is readily adapted for the employment of a loading device for automatic loading or removing of workpieces.

In the conventional front door assembly 102 described, however, the actuator is designed to keep driving the door body 103 to a full open position or a full close position. Unlike the manual operation, the actuator is incapable of bringing the door body 103 to a halt at any midpoint on the course of opening or closing of the door body 103.

As a normal operation with the machine tool, for instance, the interior machining area (machine interior) is sometimes cleaned with the door body 103 partially opened (or partially closed). This is because if the machine interior is cleaned with the door body 103 left fully opened, chip particles and the like may be scattered out of the machine, resulting in contamination of the ambient area. Unfortunately, the conventional front door assembly 102 is not adapted for such a cleaning operation.

When the machining procedure is changed, the machine is often idled with no workpiece held by a chuck for operation verification (program checking). The incapability of maintaining the door body 103 in half-open position leads to the presence of dead angle which makes it difficult to check the machine operations in detail.

Furthermore, with the arrangement wherein the door body 103 is automatically opened or closed by pressing the button, the operator may inadvertently manipulate the button. That is, a problem exists that the misoperation of the machine may cause the door body 103 to be inadvertently closed or opened although the operator does not intend to do so.

In view of the foregoing, it is an object of the invention to provide a front door assembly for machine tool which facilitates the opening/closing of a rather heavy door and permits the door to be partially opened or which is easy to use and free from misoperations and the like.

### SUMMARY OF THE INVENTION

In accordance with the invention for achieving the above object, a front door assembly for machine tool which includes a door body laterally movable and separating an interior machining area of the machine tool from a non-machining area, and a handle disposed at a front face of the door body, and in which the door body is caused to move laterally toward an open or close position by applying an external force to the handle, the front door assembly for machine tool is characterized in that the handle is movable from a neutral position in a direction of the external force, and further comprises detection means for detecting a direction of the handle moved from the neutral position, drive means for assisting in the lateral movement of the door body, and control means which receives a detection signal from the detection means for controlling operations of the drive means for assisting the door body moving in the direction of the movement of the handle.

According to the invention, when the external force is applied to the handle by pushing or pulling the handle laterally of the door body thereby to move the door body laterally toward the open or close position, the handle is moved from the neutral position in the direction of the external force as accompanied by the door body moving in this direction.

Upon movement of the handle, the detection means detects the direction of the movement of the handle for applying the detection signal to the control means. In response to the detection signal, the control means controls the operations of the drive means for assisting the door body laterally moving in the detected direction. This permits the operator to readily open or close the door body, laterally moving the door body with a very little force.

If the handle is returned to the neutral position and the force applied thereto is removed, the detection means stops detecting the direction of the handle moved. The control means, in turn, causes the drive means to stop assisting the door, thereby stopping the lateral movement of the door body.

According to the invention, the door body is laterally moved with the assistance of the drive means and therefore, the operator can readily open or close the door body, laterally moving the door body with a very little force. In addition, the arrangement is made such that the door body is brought to a halt at any midpoint on the course of opening (or closing) by returning the handle to the neutral position. This provides convenience in the aforementioned operations such as cleaning of the machine interior, checking of the machine operations and the like. Further, the application of the external force to the handle causes the assisting force in the direction of the external force. This permits the door body to be moved as intended by the operator.

It is noted that the handle may be designed to pivot. The drive means may be composed of a rack disposed at an upper part of the door body as extended along the movement thereof, a pinion gear meshed with the rack and a drive motor which is supported by a bracket fixed to the machine tool and has its output shaft coupled to the pinion gear, and the operations of which are controlled by the control means. It is preferred in this case that the rack is securely supported at place by means of an elastic piece.

### BRIEF DESCRIPTION OF THE DRAWINGS

Fig.1 is a front view showing a front door assembly for machine tool according to one embodiment of the invention;
Fig.2 is a fragmentary enlarged view showing a portion of Fig.1;
Fig.3 is a fragmentary enlarged view showing another portion of Fig.1;
Fig.4 is a side view as seen in a direction of arrow G in Fig.2;
Fig.5 is a sectional view taken on line C-C in Fig.1;
Fig.6 is a rear view as seen in a direction of arrow D in Fig.5; and
Fig.7 is a perspective view showing a whole body of an NC lathe with the conventional front door assembly.

### DETAILED DESCRIPTION OF PREFERRED EMBODIMENT

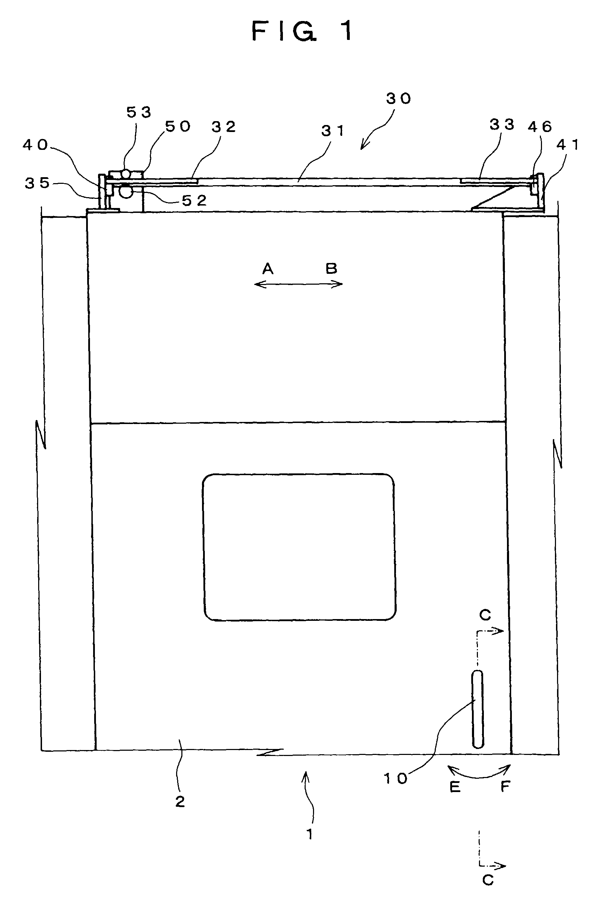

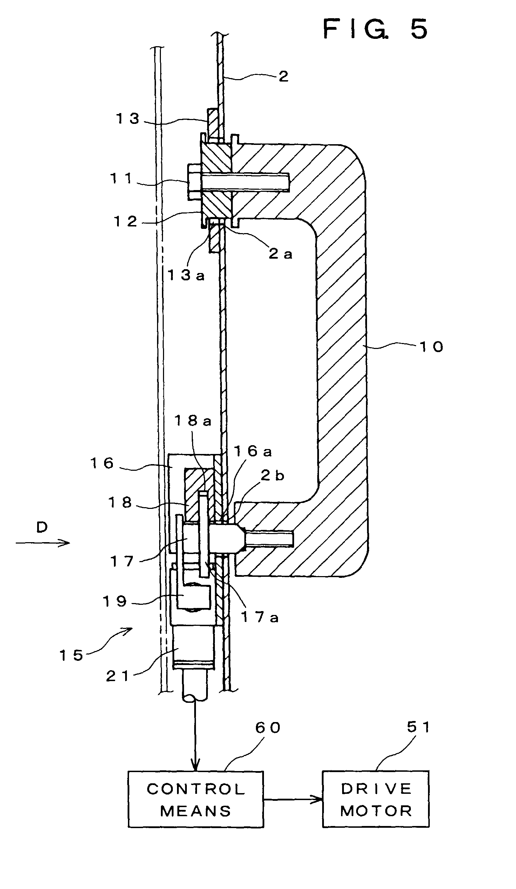

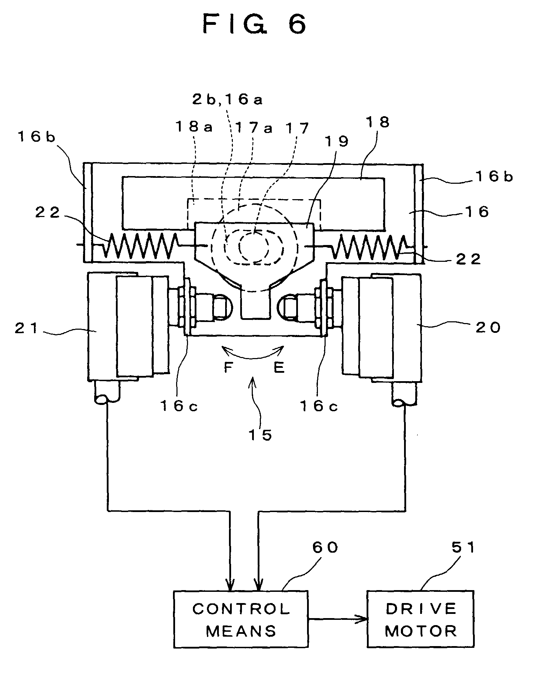

Now, a specific embodiment of the invention will hereinbelow be described with reference to the accompanying drawings. Fig.1 is a front view showing a front door assembly for machine tool according to an embodiment of the invention. Fig.5 is a sectional view taken on line C-C in Fig.1 whereas Fig.6 is a rear view as seen along a direction of arrow D in Fig.5. It is noted that a front door assembly 1 of this example is used with the NC lathe similarly to the front door assembly 102 of Fig.7.

As shown in Figs.1, 5 and 6, the front door assembly of the example includes a door body 2 laterally movable (slidable) in directions of arrows A-B, a handle 10 disposed at a front face of the door body 2 as allowed to pivot in directions of arrows E-F, detection means 15 for detecting a direction of pivotal movement of the handle 10, drive means 30 for assisting the door body 2 laterally moving in the directions of arrows A-B, and control means 60 which receives a detection signal from the detection means 15 for controlling operations of the drive means 30.

As seen in Fig.5, the handle 10 is of a member having a U-shaped section and has an upper portion thereof mounted to the door body 2 by means of a fitting 12 and a mounting bolt 11. The mounting portion of the door body 2 is imparted with an additional strength by a reinforcing member 13 on a back side of the door body 2. The fitting 12 extends through through holes 13a, 2a defined in the reinforcing member 13 and the door body 2 for permitting the handle to pivot in the directions of arrows E-F, as shown in Fig.1.

As shown in Fig.5, the handle 10 has a lower portion thereof mounted to the door body 2 by means of a mounting bolt 17 formed with a flanged portion 17a at a midportion of its shank. The detection means 15 is disposed on the back side of the door body 2 at place where the lower portion of the handle is mounted.

As shown in Figs.5 and 6, the detection means 15 includes a mounting bracket 16 fixed to the back side of the door body 2, a guide block 18 fixed to a back side of the mounting bracket 16, a dog 19 fixed to the mounting bolt 17, and limit switches 20, 21 mounted to the mounting bracket 16.

As shown in Fig.6, the mounting bracket 16 is composed of a substantially T-shaped member with side plates 16b, 16b and 16c, 16c upstanding from respective pairs of opposite sides of its back face. The mounting bracket 16 and the door body 2 are formed with oblong holes 16a, 2b, respectively. The mounting bolt 17 extends through these oblong holes 16a, 2b. The guide block 18 with a cutaway portion 18a is fixed to place above the oblong hole 16a so that the flanged portion 17a of the mounting bolt 17 is partially received by the cutaway portion 18a. Thus, the mounting bolt 17 is allowed to move within and along the oblong holes 16a, 2b as guided by the cutaway portion 18a of the guide block 18.

On the other hand, the dog 19 is also composed of a substantially T-shaped member which is provided with tension springs 22, 22 at opposite ends of its horizontal side. The dog 19 is attached to the mounting bolt 17 in a manner to interpose its vertical side between the side plates 16c, 16c of the mounting bracket 16. The tension springs 22, 22 respectively have the other ends thereof secured to the side plates 16c, 16c of the mounting bracket 16, thus biasing the dog 19 in respective directions of their contractions. In this manner, the dog 19 and the mounting bolt 17 are positioned at midpoint (neutral position) with respect to the directions of arrows E-F.

The limit switches 20, 21 are respectively fixed to the side plates 16c, 16c of the mounting bracket 16 in a manner that their contactors oppose each other over the vertical side of the dog 19. The dog 19 is adapted to move together with the mounting bolt 17 in the directions of arrows E-F thereby bringing its vertical side into contact with either of the contacts for applying an ON signal to the control means 60.

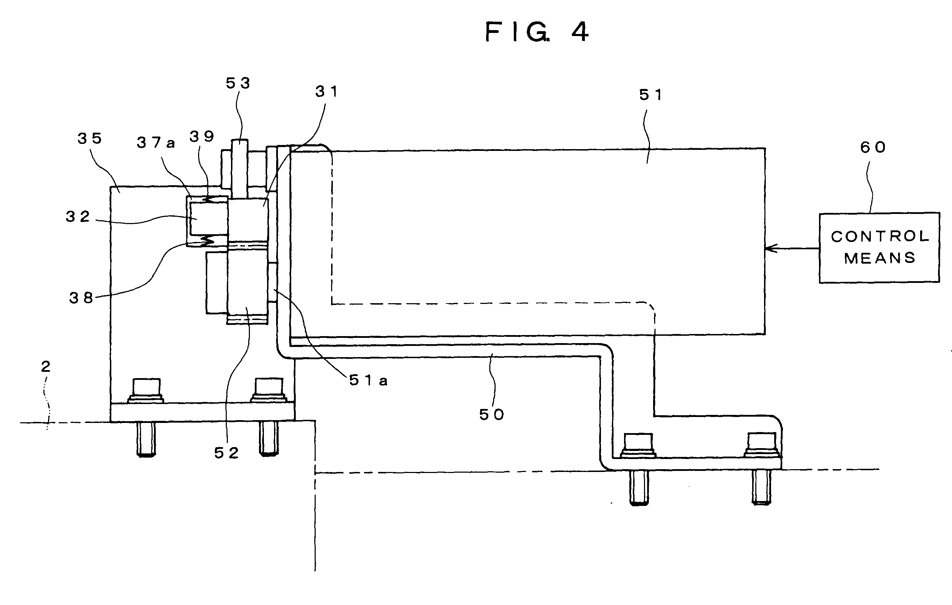

As shown in Fig.1, the drive means 30 includes support brackets 35, 41 disposed at opposite sides of an upper face of the door body 2; a rack bar 31 and rack fixing bars 32, 33 supported by these support brackets 35, 41; a support bracket 50 disposed at the support bracket 35; a hold-down roller 53 and a drive motor 51 (shown in Fig.4) which are supported by the support bracket 50; and a pinion gear 52 mounted to the drive motor 51.

As shown in Figs.1, 2 and 3, the rack bar 31 includes a rack 31a on its lower surface, extending along a direction of the lateral movement of the door body 2 (directions of arrows A-B). The rack fixing bars 32, 33 are secured to a front face of the rack bar 31, as somewhat projecting longitudinally outwardly from the opposite ends of the rack bar, respectively.

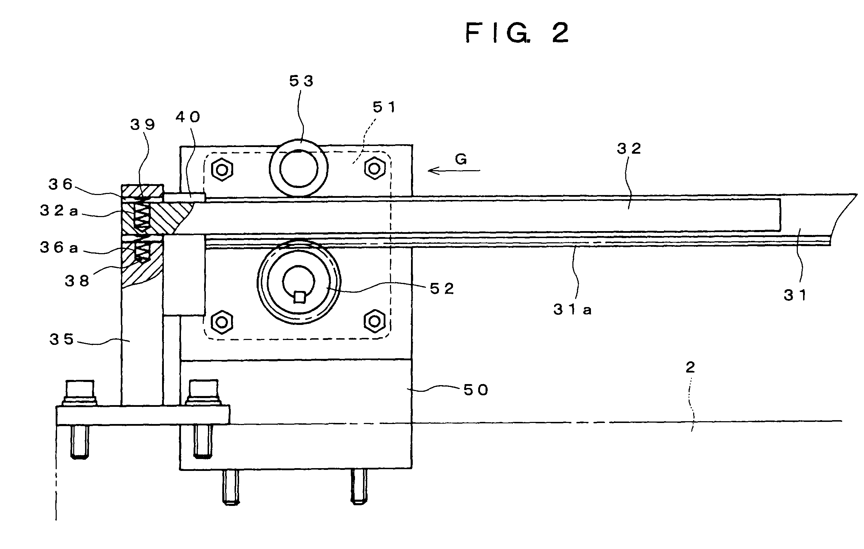

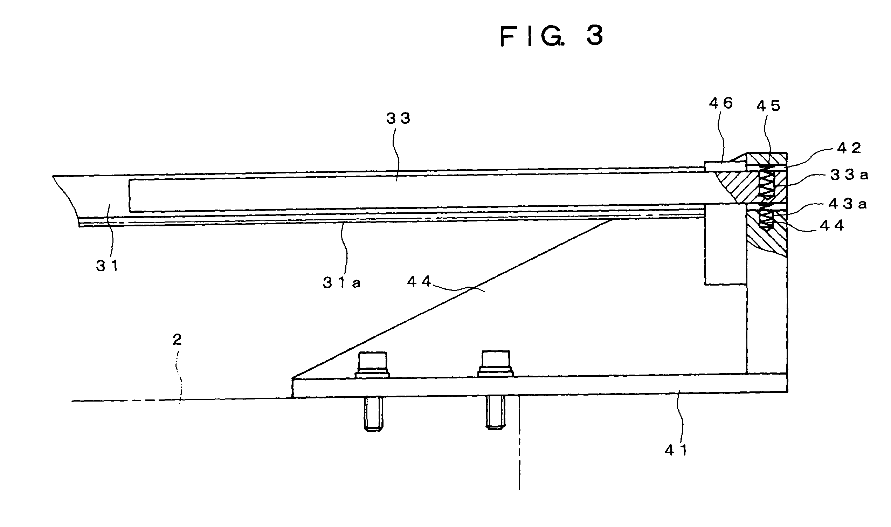

As seen in Figs.2 and 3, the support brackets 35, 41 are respectively formed with through holes 36, 42 having a rectangular section. The through holes 36, 42 each receive an end of each rack fixing bar 32, 33. The ends of the rack fixing bars 32, 33 are formed with blind holes 32a, 33a in their respective top surfaces for receiving helical compression springs 39, 45. The through holes 36, 42 of the support brackets 35, 41 are formed with a blind hole 36a, 43a in their respective bottoms for receiving helical compression springs 38, 44. The support brackets 35, 41 have elastic pieces 40, 46 secured to their respective surfaces in opposed relation so that the rack bar 31 is held between the elastic pieces 40, 46. In this manner, the rack fixing bars 32, 33 and the rack bar 31 secured thereto are somewhat vertically freely carried by the elastic pieces 40, 46 and the helical compression springs 38, 39, 44, 45.

Fig.4 is a side view as seen along a direction of arrow G in Fig.2. As seen in the figure, the support bracket 50 is secured to a fixing cover or a frame disposed at a rear portion of the door body 2. The drive motor 51 and the hold down roller 53 are mounted to this bracket in a manner shown in the figure. The pinion gear 52 is mounted on an output shaft 51a of the drive motor 51, as meshed with the rack 31a of the rack bar 31. The hold down roller 53 is axially rotatable and mounted to place above the pinion gear 52 as abutting against an upper face of the rack bar 31 on its peripheral surface. Thus, the normal and reverse rotations of the drive motor 51 cause the rack bar 31 meshed with the pinion gear 52 to move in the directions of arrows A-B. Incidentally, this example employs a torque motor as the drive motor 51.

The control means 60 receives a signal from the limit switches 20, 21 for controlling the operations of the drive motor 51. Specifically, the control means 60 responds to an ON signal from the limit switch 20 to actuate the drive motor 51 for movement of the rack bar 31 in the direction of arrow A. On the other hand, the control means 60 responds to an ON signal from the limit switch 21 to actuate the drive motor 51 for movement of the rack bar 31 in the direction of arrow B.

With the front door assembly 1 of the above arrangement according to the embodiment hereof, the operator may hold the handle 10 to apply thereto a force in the direction of arrow A so as to move the door body 2 in the direction of arrow A (opening direction), or to urge the door body 2 in the direction of arrow A, for example, thereby pivoting the handle 10 along the direction of arrow E to move the mounting bolt 17 to an end of the oblong holes 2b, 16a. In conjunction with this, the door body 2 starts moving in the direction of arrow A.

The pivotal movement of the handle 10 in the direction of arrow E causes the dog 19 secured to the mounting bolt 17 to move in the direction of arrow E and into contact with the contactor of the limit switch 20. The limit switch 20, in turn, sends the ON signal to the control means 60.

Receiving the ON signal from the limit switch 20, the control means 60 actuates the drive motor 51 for moving the rack bar 31 meshed with the pinion gear 52 in the direction of arrow A. Thus, a power (an assisting force) of the drive motor 51 sequentially transferred to the pinion gear 52 and the rack bar 31 is transferred to the door body 2 via the support bracket 35 supporting the rack bar 31. This results in the lateral movement of the door body 2 in the direction of arrow A. The door body 2 is moved to the end of its movement to be fully opened if the handle 10 continues to be pushed in the direction of arrow A.

By virtue of the hold down roller 53 for holding down the rack bar 31, the meshed relation between the rack bar 31 and the pinion gear 52 is ensured during the movement of the rack bar 31 along the direction of arrow A. Since the rack bar 31 and the rack fixing bars 32, 33 secured thereto are somewhat vertically freely carried by the elastic pieces 40, 46 and the helical compression springs 38, 39, 44, 45, the hold down roller 53 is prevented from receiving an excessive load even if the rack bar 31 suffers deformation such as warpage.

When the operator stops urging the handle 10 along the direction of arrow A at some midpoint in the course of moving the door body 2, the urging force of the tension springs 22, 22 on the dog 19 brings the dog 19, mounting bolt 17 and handle 10 into movement in the direction of arrow F thereby returning the dog 19 to the neutral position. This brings the dog 19 out of contact with the contactor of the limit switch 20, thus stopping the ON signal output from the limit switch 20. The control means 60 responds to this to stop the operations of the drive motor 51, thereby stopping the lateral movement of the door body 2 in the direction of arrow A. Thus, the door body 2 can be stopped at any point on the course of its movement by removing the urging force on the handle 10.

When, conversely to the above, the operator urges the handle 10 in the direction of arrow B to move the door body 2 in the direction of arrow B (closing direction), the handle 10 is pivoted in the direction of arrow F to move the mounting bolt 17 to the other end of the oblong holes 2b, 16a. In conjunction with this, the door body 2 starts moving in the direction of arrow B.

The pivotal movement of the handle 10 in the direction of arrow F causes the dog 19 secured to the mounting bolt 17 to move in the direction of arrow F together with the handle 10. Thus, the dog 19 comes into contact with the contactor of the limit switch 21 which, in turn, sends the ON signal to the control means 60. In response to the ON signal from the limit switch 21, the control means 60 actuates the drive motor 51 for moving the rack bar 31 meshed with the pinion gear 52 in the direction of arrow B. This assists the door body 2 to move in the direction of arrow B so that the door body 2 starts moving in this direction.

When, at some midpoint on the course of movement, the operator stops urging the handle 10 in the direction of arrow B, the urging force of the tension springs 22, 22 on the dog 19 causes the dog 19, mounting bolt 17 and handle 10 to move in the direction of arrow E thereby returning the dog 19 to its original position or the neutral position. Thus, the dog 19 is brought out of contact with the contactor of the limit switch 21 which stops outputting the ON signal. Hence, the control means 60 stops the operation of the drive motor 51 thereby stopping the lateral movement of the door body 2 in the direction of arrow B.

According to this front door assembly 1, the door body 2 is laterally moved with the assistance of the drive motor 51 so that the operator only need a very little force to bring the door body 2 into lateral movement toward the open position. Further, the arrangement is made such that the door body 2 may be brought to a halt at any midpoint on the course of opening or closing by removing the urging force on the handle 10. This provides convenience in the aforementioned operations such as cleaning of the machine interior, checking of the machine operations and the like. Since the drive motor is adapted to provide the assisting force in the direction of the force applied to the handle 10, the door body 2 can be moved as intended by the operator. Thus is eliminated the problem of inadvertent opening or closing of the door body 2.

Although one embodiment of the invention has been fully discussed as above, it should naturally be appreciated that this does not limit the specific modes of the invention. According to the foregoing example, the handle 10, for instance, is adapted to pivot in the directions of arrows E-F but may take other moving forms such as sliding movement as long as the handle 10 is moved in the urged direction and the direction of its movement is detectable. Further, the detection means 15 is not limited to the above. The drive means may have any mechanism as long as it can assist the door body 2 moving. In the foregoing example, a single door body 2 is provided. As a matter of course, the present invention is also applicable to an arrangement wherein two or more door bodies 2 are provided in abutted relation and adapted for lateral movement.

Providing a front door assembly for machine tool which is easy to use, facilitating the opening or closing of even a heavy door and permitting the door to be partially opened. The door assembly includes a door body 2 laterally movable and a handle 10 disposed at a front face of the door body 2. The handle 10 is movable from a neutral position in a direction of an external force applied thereto. The door assembly further includes detection means 15 for detecting a direction of the handle moved from the neutral position, drive means 30 for assisting in the lateral movement of the door body 2, and control means 60 which receives a detection signal from the detection means 15 to control operations of the drive means 30 for assisting the door body 2 moving in the direction of the handle 10 moved. The drive means 30 assisting in the movement of the door body 2 permits an operator to use a very little force for laterally moving the door body 2 to an open or close position.

## Claims

1. A front door assembly (1) for machine tool which includes a door body (2) laterally movable and separating an interior machining area of the machine tool from a non-machining area, and a handle (10) disposed at a front face of the door body (2), and in which said door body (2) is caused to move laterally toward an open or close position by applying an external force to the handle (10),
the front door assembly (1) characterized in that said handle (10) is movable from a neutral position in a direction of the external force, and
that there are further provided detection means (15) for detecting a direction of the handle (10) moved from the neutral position, drive means (30) for assisting in the lateral movement of said door body (2), and control means (60) which receives a detection signal from said detection means (15) for controlling operations of said drive means (30) for assisting said door body (2) moving in the direction of the movement of said handle (10).

2. The front door assembly (1) for machine tool as claimed in Claim 1, characterized in that said handle (10) is pivotally movable.

3. The front door assembly (1) for machine tool as claimed in Claim 1, characterized in that said drive means (30) comprises a rack (31) disposed at an upper part of said door body (2) as extended along the direction of movement of the door body (2), a pinion gear (52) meshed with this rack (31), and a drive motor (51) which is supported by a bracket (50) fixed to the machine tool and has its output shaft (51a) coupled to said pinion gear (52) and the operations of which are controlled by said control means (60).

4. The front door assembly (1) for machine tool as claimed in Claim 3, characterized in that said rack (31) is securely supported at place by means (40),(46) of an elastic piece.
